Europäisches Patentamt

European Patent Office

Office européen des brevets

(11) Veröffentlichungsnummer : **0 206 131**
**B1**

(12) **EUROPÄISCHE PATENTSCHRIFT**

(45) Veröffentlichungstag der Patentschrift :
13.04.88

(51) Int. Cl.⁴ : **F 16 C 11/08, F 16 C 27/02**

(21) Anmeldenummer : **86107992.9**

(22) Anmeldetag : **11.06.86**

(54) **Kugelgelenk.**

(30) Priorität : **20.06.85 DE 3522013**

(43) Veröffentlichungstag der Anmeldung :
**30.12.86 Patentblatt 86/52**

(45) Bekanntmachung des Hinweises auf die Patenterteilung : **13.04.88 Patentblatt 88/15**

(84) Benannte Vertragsstaaten :
**DE FR GB IT**

(56) Entgegenhaltungen :
**DE-C-    165 372
FR-A-    877 230
FR-A- 2 059 175
FR-A- 2 098 010
FR-A- 2 554 531
PATENTS ABSTRACTS OF JAPAN, Band 8, Nr. 100
(M-295)[1537], 11. Mai 1984; JP-A-59 13 125 (MICHIO
YOSHIKAWA) 23-01-1984**

(73) Patentinhaber : **TRW Ehrenreich GmbH & Co. KG
Hansa-Allee 190
D-4000 Düsseldorf 11 (DE)**

(72) Erfinder : **Busse, Fritz, Dipl.-Ing.
Ludwig-Richter-Weg 29
D-4010 Hilden (DE)**
Erfinder : **Schnitzler, Franz Dieter, Dipl.-Ing.
Mettmanner Strasse 117
D-4010 Hilden (DE)**

(74) Vertreter : **Patentanwälte Dipl.-Ing. Alex Stenger
Dipl.-Ing. Wolfram Watzke Dipl.-Ing. Heinz J. Ring
Kaiser-Friedrich-Ring 70
D-4000 Düsseldorf 11 (DE)**

## Beschreibung

Die Erfindung betrifft ein Kugelgelenk für Übertragungsgestänge in Kraftfahrzeugen mit einem in ein Gelenkgehäuse unter Zwischenlage einer Lagerschale eingesetzten Kugelkopf bzw. einer eingesetzten Kugel, wobei zwischen der Lagerschale und dem Gelenkgehäuse ein mit einem fließfähigen Medium gefüllter, ringförmiger Hohlraum mit elastisch verformbaren Wänden angeordnet ist.

Die Lenkgestänge von Kraftfahrzeugen unterliegen bei der Fahrt fortwährend dynamischen Belastungen, die von Fahrbahnunebenheiten, Radunwuchten usw. verursacht werden. Weiterhin können stoßförmige Belastungen durch Fast-Unfälle, Schleudern und Fahren gegen Hindernisse auftreten. Diese Belastungen müssen abgedämpft werden, damit sie nicht störend auf das Lenkgetriebe und das Lenkrad einwirken und damit die Bauteile des Lenkgestänges nicht beschädigt werden. Außerdem ist es für das Fahrverhalten mancher Kraftfahrzeuge vorteilhaft, wenn die Kraftübertragung im Lenkgestänge elastisch ist. Hierdurch wird den sogenannten Über- oder Untersteuertendenzen entgegengewirkt.

Es sind bereits Konstruktionen bekannt, bei denen zusätzliche gummielastische Federn im Lenkgestänge und/oder den Eingangswellen zum Lenkgetriebe eingebaut sind. Bei anderen Lenkgestängen haben die Gestänge und/oder Streben starke Abkröpfungen, um durch die Biegung weichere Kennungen und größere Arbeitsaufnahme bei Fast-Unfällen zu erzielen. Diese Konstruktionen haben die Nachteile, daß sie das Gewicht der Lenkgestänge beträchtlich erhöhen und viel Bauraum beanspruchen. Hinzu kommt, daß zusätzliche Gummifedern teuer und zusätzliche Abkröpfungen aufwendig in der Herstellung sind.

Ein anderer Versuch, die genannten Probleme zu lösen bestand darin, die Lagerschalen der mit den Lenkgestängen verbundenen Kugelgelenke aus elastischem Kunststoff herzustellen. Bei einigen bekannten Kugelgelenken, wie beispielsweise den aus der DE-A-20 34 667 bekannten, ist die Elastizität der Lagerschale durch Formgebung erhöht. Bei anderen Konstruktionen sind die Lagerschalen aus einem extrem elastischen Werkstoff.

Aus der DE-A-15 25 312 ist ein Kugelgelenk mit einer elastischen Lagerschale bekannt, die von einem im Bodenbereich des Gelenkgehäuses angeordneten Druckmittel zur gleichmäßigen Anlage an den Kugelkopf gebracht wird. Die Lagerschale füllt den Spalt zwischen Kugelkopf und Gelenkgehäuse so aus, daß insbesondere Querbewegungen des Kugelkopfes zur Gehäuseachse im wesentlichen durch Zusammendrücken des Lagerschalenmaterials aufgefangen werden.

Die bekannten elastischen Lagerschalen haben den Nachteil, daß sie nur in einer Richtung eine erhöhte Formelastizität haben, daß sie nur begrenzt belastbar sind und daß ihr Werkstoff unter Belastung relaxiert, so daß die Vorspannung von Kugel und Lagerschale verlorengehen kann. Darüber hinaus kann die Dämpfung und Elastizität nur begrenzt durch Wahl des Lagerschalenmaterials beeinflußt werden. Bei dem aus der DE-A-15 25 312 bekannten Kugelgelenk ist zudem die Abdichtung des Druckraumes problematisch, so daß ein Absinken des Innendrucks des Druckmittels besorgt werden muß.

Davon ausgehend liegt der Erfindung die Aufgabe zugrunde, ein elastisch abdämpfendes Kugelgelenk zu schaffen, dessen Elastizität und Dämpfung sich in einem weiten Bereich beeinflussen lassen, das vor Überbelastung geschützt ist, das Belastungen dauerhaft und ohne Materialermüdung bzw. Absinken der Vorspannung der Lagerschale erträgt und eine funktionssichere Konstruktion hat.

Zur technischen Lösung dieser Aufgabe wird ein gattungsgemäßes Kugelgelenk vorgeschlagen, bei dem sich der Hohlraum nahezu über die gesamte axiale Länge des Gelenkgehäuses erstreckt, so daß der Kugelkopf bzw. die Kugel unter Verdrängung des fließfähigen Mediums Relativbewegungen quer zur Gehäuseachse ausführen kann.

Dieser technischen Lehre liegt also der Erfindungsgedanke zugrunde, den Kugelkopf bzw. die Kugel so zu lagern, daß dieser bzw. diese bei einer Laständerung des Kugelgelenkes eine Relativbewegung quer zur Gehäuseachse ausführen kann, wobei durch die innere Reibung des im Hohlraum befindlichen fließfähigen Mediums Bewegungsenergie verzehrt und die Belastungsschwankungen gedämpft übertragen werden. Da die elastisch verformbaren Wände des Hohlraumes das Bestreben haben, nach der Verformung in ihre Ausgangsform zurückzukehren, ist das erfindungsgemäße Kugelgelenk elastisch. Es können deshalb Materialien mit einer optimalen Elastizität mit einem fließfähigen Medium kombiniert werden, welches optimale Dämpfungseigenschaften hat. Dabei ist es vorteilhaft, daß das fließfähige Medium keine besonderen Schmier- oder Gleiteigenschaften aufweisen muß. Das erfindungsgemäße Kugelgelenk kann weiterhin eine statische, radiale Überlast aufnehmen, da die radiale Verformbarkeit des ringförmigen Hohlraumes begrenzt ist. Die Vorspannung des Kugelkopfes wird also nicht merklich durch Relaxation reduziert, da die Lagerschale in einer günstigen Weise beansprucht wird und radiale Überlasten aufgefangen werden.

Bei einer Ausgestaltung der Erfindung wird der Hohlraum von mindestens einem Hohlkörper aus einem elastischen Kunststoff gebildet, der die Lagerschale mit einer Innenwand abstützt, der mit einer Außenwand an der Gehäusebohrung anliegt und die Innenwand mit der Außenwand verbindende Stirnwände hat. Bei dieser Ausgestaltung der Erfindung wird eine konventionell ein- oder zweiteilig ausgebildete Lagerschale an ihrem Umfang von mindestens einem erfindungsgemäßen Hohlkörper im Gelenkgehäuse gehalten, so daß die Lagerschale im Prinzip unverformt quer zur Gehäuseachse auslenkbar ist. Diese Ausgestaltung hat den Vorteil, daß das Lagerschalenmaterial speziell im Hinblick auf die Gleiteigenschaften des Kugelkopfes bzw. der Kugel ausgesucht werden kann. In axialer Richtung können Hohlkörper und Lagerschale beispielsweise von separaten Stützringen gehalten werden.

Bei einer weiteren Ausgestaltung überkragen die Stirnwände des zuvor beschriebenen Hohlkörpers die Innenwände und stützen die Stirnwände die Lagerschale in axialer Richtung ab. Auf diese Weise wird die Lagerschale vergrößert, so daß auch eine gewisse axiale Bewegung des Kugelkopfes bzw. der Kugel möglich ist. Darüber hinaus brauchen lediglich Stützringe bzw. Anschläge für den Hohlkörper vorgesehen zu werden.

Bei einer weiteren Ausgestaltung wird der Hohlraum von mindestens einem Hohlkörper aus einem elastischen Kunststoff gebildet, der den Kugelkopf bzw. die Kugel mit einer als Lagerschale ausgebildeten Innenwand abstützt, der mit einer Außenwand an der Gehäusebohrung anliegt und die Innenwand und die Außenwand verbindende Stirnwände hat. Diese Hohlkörper können einfach anstatt der herkömmlichen Lagerschalen in ein Kugelgelenk eingesetzt werden, ohne daß ein zusätzlicher Platzbedarf entsteht.

Bei einer weiteren Ausgestaltung haben die Stirnwände des Hohlkörpers außen ringförmig umlaufende Falten und gegebenenfalls innen, d. h. am Kugeläquator, leicht ausgewölbte Stirnflächen, die unter Radiallast durch gegenseitige Anlage einen steifen, doppelwandigen Steg bilden. Dieser Steg bewirkt eine progressive Rückstellkraft.

Bei einer weiteren Ausgestaltung hat bei einem Kugelgelenk mit eingesetztem Kugelkopf die Lagerschale aus einem elastischen Kunststoff eine topfförmige Innenschale und eine die Innenschale umschließende, an der Gehäusebohrung anliegende Außenschale, wobei der Hohlraum von der Innenschale und der Außenschale, von einem die Innenschale und die Außenschale an der Stirnseite verbindenden Verbindungssteg und von einem die Außenschale an der anderen Stirnseite schließenden Verschluß des Gelenkgehäuses begrenzt wird. Diese Lagerschale kann ebenfalls anstatt einer herkömmlichen Lagerschale in einem Kugelgelenk montiert werden. Darüber hinaus ist sie besonders einfach aus Kunststoff herstellbar, insbesondere weil sie nachträglich mit einem fließfähigen Medium füllbar ist. Das fließfähige Medium muß nämlich erst vor dem Verschließen des Gelenkgehäuses in den Hohlraum eingebracht werden.

Bei einer Ausgestaltung des zuvor beschriebenen Kugelgelenkes ist der Verbindungssteg zwischen Innenschale und Außenschale auf einem Absatz des Gelenkgehäuses abgestützt, so daß die Lagerschale sicher im Gelenkgehäuse gehalten wird. Wenn die Lagerschale im Bereich des Verbindungssteges zwischen Innenschale und Außenschale verstärkt ist, kann die Höhe der elastischen Rückstellkraft beeinflußt werden.

Bei einer weiteren Ausgestaltung ist der Verschluß des Gelenkgehäuses ein Gehäuseboden, so daß die Lagerschale durch Umbördeln eines kugelzapfenseitigen Randes oder Einsetzen eines Sicherungsringes fixiert werden kann. Der Verschluß kann aber auch ein Gehäusedeckel sein, der beispielsweise mit der Außenschale im Gelenkgehäuse eingewalzt wird. Dann kann auf einen Absatz für den Verbindungssteg auch gänzlich verzichtet werden. Darüber hinaus ist das fließfähige Medium auch nach dem Einsetzen der Lagerschale in den Hohlraum einbringbar.

Bei einer weiteren Ausgestaltung ist der Veschluß des Gelenkgehäuses ein federnder Verschlußdeckel, welcher auch ein elastisches Dämpfen axialer Belastungen ermöglicht, indem er beim Eintauchen der Innenschale in die Außenschale ein größeres Volumen freigibt. Ein ähnlicher Efekt wird erreicht, wenn der Verschluß des Gelenkgehäuses eine Membran ist, an die ein Druckraum mit einer Gasfüllung angrenzt. Bei einer Axialbewegung des Kugelkopfes wird nämlich die Gasfüllung komprimiert, wodurch ebenfalls eine elastische Rückstellkraft entsteht. Darüber hinaus bleibt beiden zuvor beschriebenen Ausführungsformen den Druck des fließfähigen Mediums auch bei geringen Leckverlusten annähernd konstant.

Bei einer weiteren Ausgestaltung hat der Hohlraum einen bereichsweise verengten Querschnitt, wodurch die Dämpfungseigenschaften des Kugelgelenkes in bestimmten Belastungsrichtungen gezielt beeinflußbar sind.

Bei einer weiteren Ausgestaltung ist in dem Hohlraum mindestens ein kompressibler Körper eingelagert, in dem sich bei einer Auslenkung des Kugelkopfes bzw. der Kugel eine zusätzliche elastische Rückstellkraft aufbaut und in dem weitere Bewegungsenergie vernichtet wird. Der kompressible Körper wird bevorzugt als die Gelenkachse umschließender Ringkörper ausgebildet, so daß die Elastizität und Dämpfung des Kugelgelenkes bei sämtlichen Belastungen quer zur Gehäuseachse gleich sind. Die Wände des Hohlraumes werden bevorzugt mit Stützrändern für den kompressiblen Körper versehen, so daß dieser in seiner Lage fixiert ist. Wenn mindestens ein kompressibler Körper im Äquatorbereich des Kugelkopfes bzw. der Kugel angeordnet ist, wird die Innenwand des Hohlkörpers bzw. die Innenschale in optimaler Weise entlastet. Darüber hinaus können sich im Hohlraum symmetrische Strömungen ausbilden, so daß sich gleichmäßige Belastungseigenschaften des Kugelgelenkes ergeben.

Bei einer weiteren Ausgestaltung ist in dem Hohlraum mindestens eine Feder angeordnet, die eine Auslenkung des Kugelkopfes bzw. der Kugel aus der Ruhelage eine Rückstellkraft entgegensetzt. Auf diese Weise werden die Wände des Hohlraumes entlastet und ist die Elastizität unabhängig von dem verwendeten Material weitgehend beeinflußbar. Bevorzugt wird die Feder ringförmig und die Gehäuseachse umschließend ausgebildet, so daß sich das Kugelgelenk bei Belastungen quer zur Gehäuseachse von der Belastungsrichtung unabhängig ist. Bei einer praktischen Ausgestaltung ist die Feder als dünner, meanderförmig gewölbter Streifen ausgebildet. Wenn die Feder im Äquatorbereich des Kugelkopfes bzw. der Kugel angeordnet ist, werden die Wände des Hohlraumes in optimaler Weise entlastet. Darüber hinaus ergibt sich auch eine symmetrische Strömung des fließfähigen Mediums, was zu gleichmäßigen Belastungseigenschaften des Kugelgelenkes beiträgt. Um die Unverrückbarkeit der Feder zu gewährleisten, können die Wände des Hohlraumes Stützränder zur Aufnahme der Feder haben. Dies kann aber auch erreicht werden, indem die Feder aus einem elastischen Kunststoff an mindestens eine Wand des Hohlraumes angespritzt ist.

Bei Ausgestaltungen der Erfindung kann das fließfähige Medium eine Flüssigkeit, eine Paste oder ein Gas sein.

Weitere Einzelheiten und Vorteile ergeben sich aus der nachfolgenden Beschreibung der zugehörigen Zeichnungen, in denen sieben bevorzugte Ausführungsformen dargestellt worden sind. In den Zeichnungen zeigen :

Fig. 1 ein Kugelgelenk mit Innenschale und Außenschale und einem Gehäusedeckel als Verschluß im Längsschnitt ;

Fig. 2 dasselbe Kugelgelenk entlang der Linie II-II der Fig. 1 geschnitten :

Fig. 3 ein Kugelgelenk wie in Fig. 1 mit einem eingelagerten kompressiblen Ringkörper im Längsschnitt ;

Fig. 4 dasselbe Kugelgelenk entlang der Linie IV-IV der Fig. 3 geschnitten ;

Fig. 5 ein Kugelgelenk mit Innenschale und Außenschale und einem federnden Verschlußdeckel im Längsschnitt ;

Fig. 6 dasselbe Kugelgelenk entlang der Linie VI-VI der Fig. 5 geschnitten ;

Fig. 7 ein Kugelgelenk mit Innenschale und Außenschale und einer Membran und einem Gehäusedeckel im Längsschnitt ;

Fig. 8 dasselbe Kugelgelenk entlang der Linie VIII-VIII der Fig. 7 geschnitten ;

Fig. 9 Zusammenhang zwischen Radialkraft und Auslenkung des Kugelkopfes des Kugelgelenkes aus Fig. 1 ;

Fig. 10 Zusammenhang zwischen Radialkraft und Auslenkung im Bereich geringerer Kräfte des Kugelgelenkes aus Fig. 1 ;

Fig. 11 Zusammenhang zwischen Radialkraft und Auslenkung des Kugelkopfes des Kugelgelenkes aus Fig. 1 bei weicherer Lagerschalenkonstruktion ;

Fig. 12 Zusammenhang wie in Fig. 9 bei Verwendung einer Flüssigkeit mit niedrigerer Viskosität ;

Fig. 13 Zusammenhang wie in Fig. 10 bei Verwendung einer Flüssigkeit mit niedrigerer Viskosität ;

Fig. 14 Zusammenhang wie in Fig. 11 bei Verwendung einer Flüssigkeit mit niedrigerer Viskosität ;

Fig. 15 ein Kugelgelenk mit Innenschale, Außenschale und einer ringförmigen Feder im Längsschnitt ;

Fig. 16 dasselbe Kugelgelenk in vergrößertem Teilschnitt entsprechend der Linie XVI-XVI der Fig. 15 ;

Fig. 17 dasselbe Kugelgelenk entlang der Linie XVII-XVII der Fig. 15 geschnitten ;

Fig. 18 ein Kugelgelenk mit einem die Lagerschale abstützenden Hohlkörper und eingelagerter Feder im Längsschnitt ;

Fig. 19 dasselbe Kugelgelenk in vergrößertem Teilschnitt XIX-XIX der Fig. 18 ;

Fig. 20 dasselbe Kugelgelenk mit aus der Ruhelage ausgelenkter Kugel in der Darstellung der Fig. 18 ;

Fig. 21 ein Kugelgelenk mit einem die Kugel abstützenden Hohlkörper im Längsschnitt ;

Fig. 22 dasselbe Kugelgelenk mit aus der Ruhelage bewegter Kugel in der Darstellung der Fig. 21.

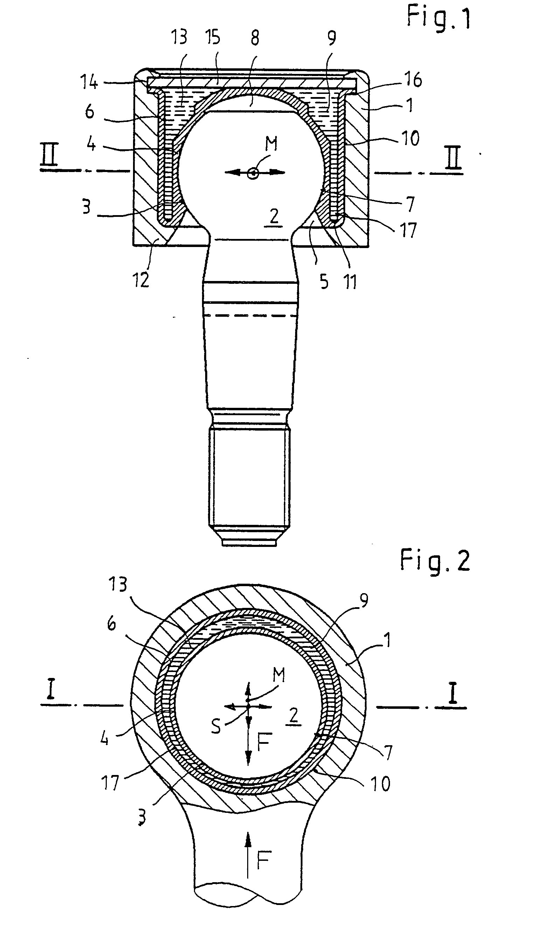

Ein einfaches Kugelgelenk, das radiale Belastungsschwankungen und Stöße elastisch dämpft ist in der Fig. 1 dargestellt. Es besteht aus einer zwischen einem Gelenkgehäuse 1 und einem Kugelkopf 2 eingesetzten Lagerschale 3 aus einem elastischen Kunststoff. Die Lagerschale 3 hat eine Innenschale 4 und eine einstückig an der Einführungsöffnung 5 des Kugelkopfes 2 damit verbundene Außenschale 6. Die Innenschale 4 liegt mit ihrer Innenoberfläche auf der Lagerfläche 7 des Kugelkopfes 2 auf, wobei sie den Kugelkopf 2 beidseitig des Kugeläquators umfaßt. Die Innenschale 4 bildet mit dem Kugelkopf 2 einen Hohlraum, der als Fettreservoir 8 dient.

Die Außenschale 6 umgibt die Innenschale 4 teilweise, so daß ein ringförmiger Hohlraum 9 zwischen Innenschale 4 und Außenschale 6 gebildet wird. Die Lagerschale 3 liegt mit dem Umfang des Mantels ihrer Außenschale 6 an der Gehäusebohrung 10 an und ist am Verbindungssteg 11 von Innenschale 4 und Außenschale 6 auf einem Absatz 12 des Gelenkgehäuses 1 abgestützt. Der Hohlraum 9 ist mit einem fließfähigen Medium 13 gefüllt und mit einem in einer Nut 14 des Gelenkgehäuses 1 eingewalzten Gehäusedeckel 15 dicht verschlossen. Die Lagerschale 3 ist mit einem Ringflansch 16 ebenfalls in der Ringnut 14 befestigt. Somit wird die Lagerschale 3 sowohl in radialer Richtung, als auch in axialer Richtung sicher gehalten.

Die Formgebung der Lagerschale 3 in Verbindung mit einer geeigneten Wahl des Lagerschalenwerkstoffes (beispielsweise Polyurethan), ermöglichen eine radiale Beweglichkeit des Kugelkopfes mit Bewegungskomponenten gemäß den in den Fig. 1 und Fig. 2 eingetragenen Pfeilrichtungen. Der radiale Bewegungsspielraum der Innenschale 4 wird von der Innenwand 17 der Außenschale 6 begrenzt.

Die Fig. 2 zeigt dasselbe Kugelgelenk, bei dem die Innenschale 4 unter dem Einfluß einer radialen Kraft F von der Mittenlage M in die Seitenlage S bewegt ist. Hierdurch ist der Querschnitt des Hohlraumes 9 bereichsweise verengt und bereichsweise erweitert. Dabei ist das Medium 13 in der, der Bewegungsrichtung der Innenschale 4 entgegengesetzten Richtung verschoben worden. Die hierzu nötige Verdrängungsarbeit ist im wesentlichen von den Fließeigenschaften des Mediums, der Belastungsgeschwindigkeit und der Geometrie des Hohlraumes abhängig. Es ist deshalb möglich, die Dämpfungseigenschaften eines erfindungsgemäßen Kugelgelenkes auf verschiedene Weise zu beeinflussen. Als fließfähige Medien kommen beispielsweise Flüssigkeiten, Pasten, z. B. Plastisol durch eingelagerte Gasblasen kompressible Medien, Emulsionen oder sonstige Zweiphasengemische in Betracht. Es sind auch Abweichungen von dem gezeigten Ausführungsbeispiel denkbar, bei dem der Querschnitt des Ringraumes in den Bereichen senkrecht zur Belastungsrichtung verengt ist. Diese Verengungen können entweder durch eine dickere Wand der Lagerschale 3 in diesen Bereichen oder durch mit dem Gehäusedeckel 15 verbundene Stege erzeugt werden. Sie bewirken erhöhte Strömungsverluste.

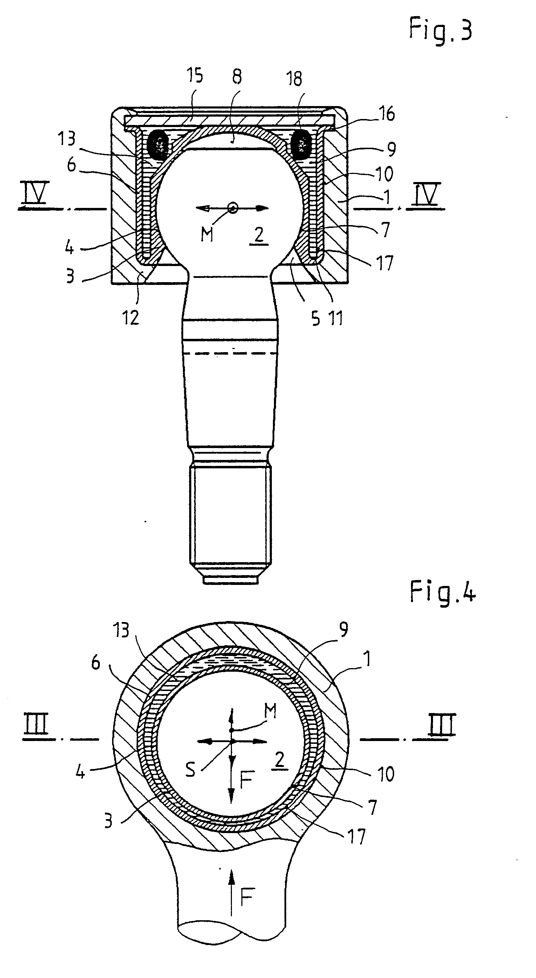

Das in den Fig. 3 und Fig. 4 gezeigte Kugelgelenk unterscheidet sich von dem aus der Fig. 1 und der Fig. 2 durch einen, in den Hohlraum 9 eingelagerten kompressiblen Ringkörper 18, der auf dem Mantel der Innenschale 4 von einer Zylinderfläche 19 geführt und von einer Kegelfläche 20 unterstützt wird. Dieser Ringkörper 18 besteht beispielsweise aus Zellvulkolan, das bei Verwendung aggressiver Medien 13 beschichtet sein kann. Bei einer Radialbewegung der Innenschale 4 wird der Ringkörper 18 komprimiert, wodurch dieser einerseits elastisch vorgespannt und andererseits durch die Verrichtung von Walkarbeit Energie vernichtet. Bei dieser Ausführungsform des erfindungsgemäßen Kugelgelenkes wird der Verbindungssteg 11 zwischen Innenschale 4 und Außenschale 6 entlastet, da der Ringkörper 18 einen Teil der elastischen Rückstellkräfte übernimmt.

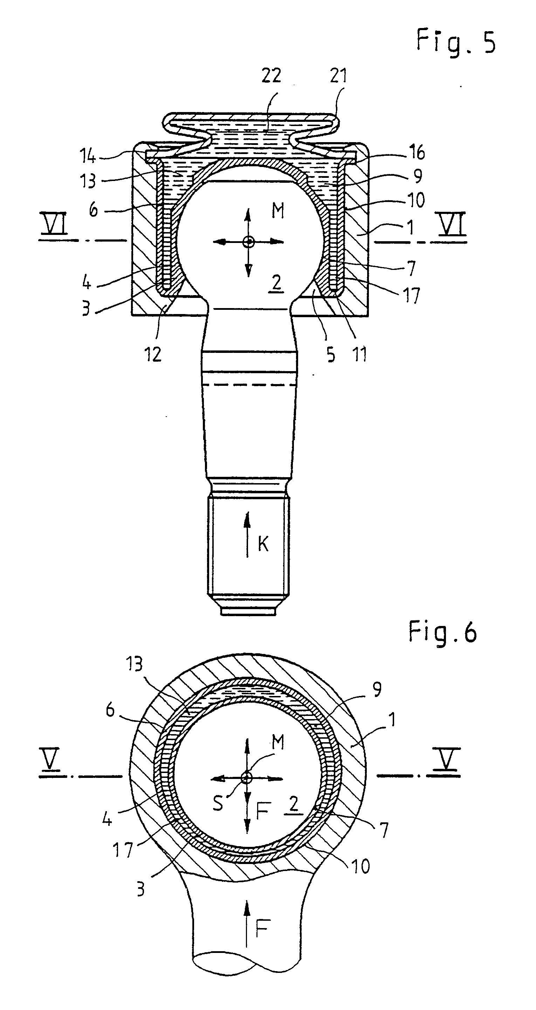

Den bislang gezeigten Ausführungsformen des erfindungsgemäßen Kugelgelenkes ist gemeinsam, daß sie eine nur geringe Elastizität und Dämpfung bei axialen Belastungen haben, da einer axialen Belastung die geringe Kompressibilität der in Betracht kommenden fließfähigen Medien und die begrenzte axiale Verformbarkeit der Lagerschale entgegensteht. Das Kugelgelenk in der Ausführungsform der Fig. 5 ermöglicht auch ein elastisches Dämpfen axialer Belastungen, indem der Verschluß des Hohlraumes 9 als federnder Verschlußdeckel ausgebildet ist. Bei axialer Belastung durch eine Kraft K taucht die Innenschale 4 tiefer in die Außenschale 6 ein und erhöht dabei den hydrostatischen Druck des Mediums 13. Hierdurch entfaltet sich der balgförmig aufgebaute federnde Verschlußdeckel 21 und gibt dem Medium 13 im Balgraum 22 ein vergrößertes Volumen frei. Bei der Verdrängung der Flüssigkeit wird Dämpfungsarbeit geleistet. Sobald die Einwirkung der Kraft K entfällt, wird die Innenschale 4 durch die elastischen Rückstellkräfte der Lagerschale 3 in ihre Mittellage zurückbewegt, wobei der zurückfedernde Verschlußdeckel 21 über das Medium 13 eine zusätzliche Rückstellkraft auf den Mantel der Innenschale 4 ausübt. Es ist bemerkenswert, daß ein axial und radial elastisches abdämpfendes Kugelgelenk aus der Ausführungsform der Fig. 1 und 2 durch Ersatz des Gehäusedeckels 15 durch den Verschlußdeckel 21 und durch Hinzufügen von einer geringfügigen Menge fließfähigem Mediums hervorgeht. Somit lassen sich Kugelgelenke unterschiedlicher Eigenschaften in einem fast einheitlichen Verfahren herstellen.

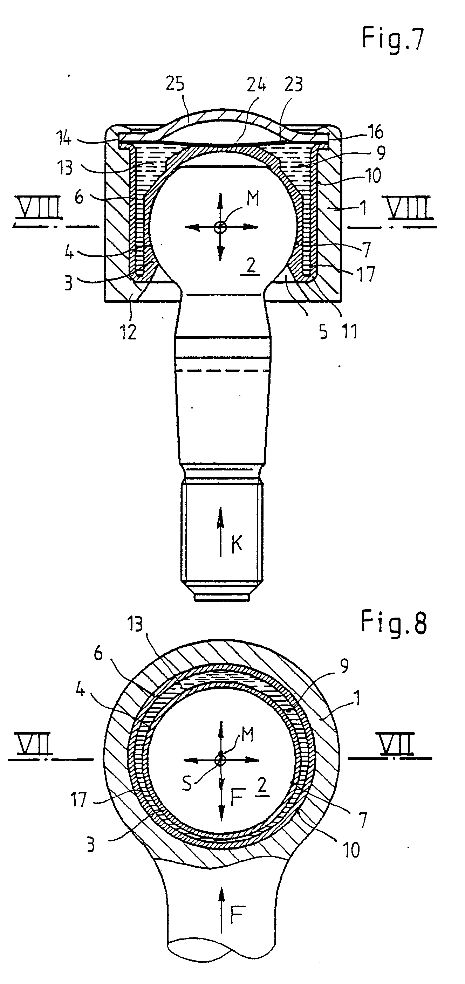

Ein sowohl radial als auch axial elastisch dämpfendes Kugelgelenk ist auch durch die Ausführungsform der Fig. 7 und 8 gegeben, die sich ebenfalls geringfügig von der Grundausführung in den Fig. 1 und 2 unterscheidet. In diesem Fall ist der Hohlraum 9 mit einer Membran 23 verschlossen, an die ein Druckraum 24 angrenzt, der seinerseits von einem Gehäusedeckel 25 abgeschlossen wird. Der Gehäusedeckel 25, die Membran 23 und der Ringflansch 16 an der Außenschale 6 sind gemeinsam in eine Nut (14) des Gelenkgehäuses 1 eingesetzt und eingewalzt. Hierdurch ist der mit einer Gasfüllung versehene Druckraum 24 gasdicht verschlossen.

Beim Einwirken einer axialen Kraft K taucht die Innenschale 4 tiefer in die Außenschale 6 ein und verdrängt dabei das Medium 13. Das Medium 13 drückt auf die Membran 23 und komprimiert die Gasfüllung im Druckraum 24. Bei der Verdrängung des Mediums 13 wird zusätzlich Dämpfungsarbeit verrichtet. Sobald die axiale Kraft K entfällt, bewirkt die Elastizität der Lagerschale 3 eine Rückkehr der Innenschale 4 in ihre Mittellage M. Dies wird dadurch unterstützt, daß sich die Gasfüllung um Druckraum 24 entspannt, indem sie über die Membran 23 auf das fließfähige Medium 13 einwirkt, welches seinerseits auf den Mantel der Innenschale 4 drückt. Die Bewegung der Membran 23 kann mit der Bewegung der Innenschale 4 gekoppelt werden, indem die Membran 23 auf der Stirnseite 26 des Mantels der Innenschale 4 aufliegt.

Sowohl die Ausführungsform der Fig. 5 und 6 als auch die Ausführungsform der Fig. 7 und 8 ermöglichen ein elastisches Abdämpfen radialer und axialer Belastungen des Kugelgelenkes, wobei sich diese Belastungen auch überlagern dürfen, so daß Bewegungskomponenten des Kugelkopfes 2 in beliebigen der in den Fig. 5 bis 8 eingetragenen Pfeilrichtungen statthaft sind. Die Ausführungsform der Fig. 7 und 8 hat den Vorteil, daß sie keine beweglichen Teile am Mantel des Gelenkgehäuses 1 hat, deren Zerstörung die Betriebseigenschaften des Kugelgelenkes verändern würde.

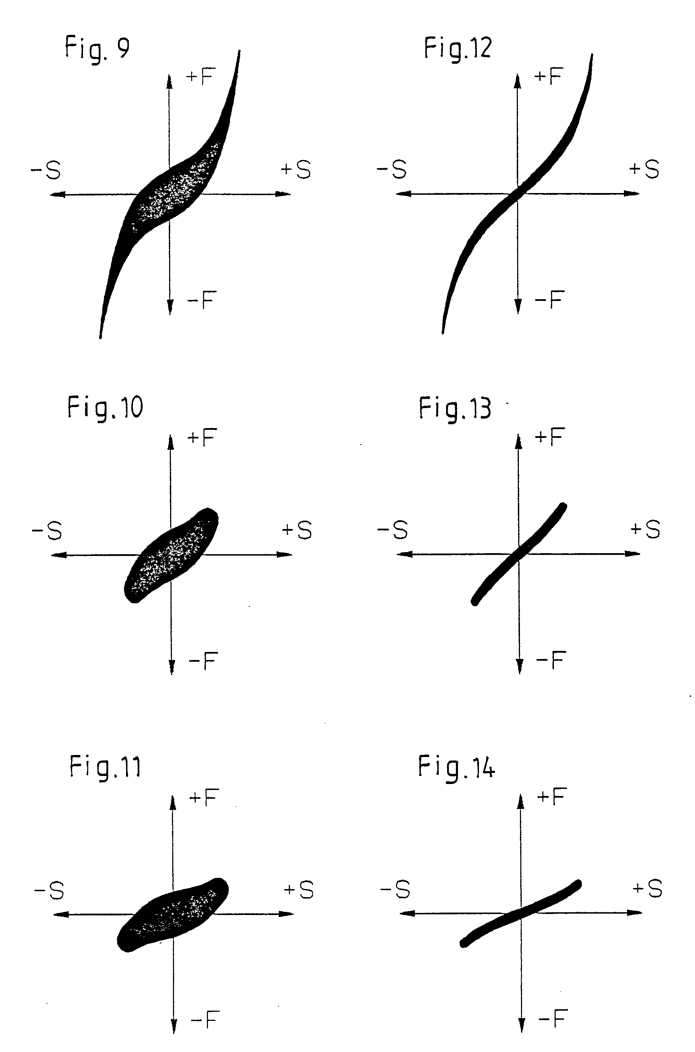

Zur Verdeutlichung der Eigenschaften des erfindungsgemäßen Kugelgelenkes sind in den im folgenden erläuterten Fig. 9 bis 14 die Abhängigkeiten der Auslenkung von der Radialkraft bei einer Ausführungsform gemäß Fig. 1 und 2 dargestellt. Wie die Fig. 9 zeigt, erfolgt ein starker Anstieg der Radialkraft F, wenn die Auslenkung S der Innenschale so groß ist, daß sie an der Innenwand der Außenschale anliegt. Die Hysterese rührt daher, daß die Radialkraft eine Mindesthöhe aufweisen muß, um das Medium zum Fließen zu bringen. Die Fig. 10 zeigt ein identisch aufgebautes Kugelgelenk bei geringeren Belastungen. Ein steiler Anstieg der Radialkraft F ist bei geringen Auslenkungen S nicht zu verzeichnen. Die Fig. 11 zeigt ein Kugelgelenk der gleichen Bauart, bei dem die Lagerschale weichelastischer ist. Dies hat bereits bei geringen Kräften F eine relativ große Auslenkung S des Kugelkopfes zur Folge.

Die folgenden Abbildungen Fig. 12 bis Fig. 14 zeigen die Belastungseigenschaften eines Kugelgelenkes bei Verwendung eines Mediums mit niedrigerer Viskosität. Generell ist die Hysterese wesentlich geringer ausgeprägt, da eine wesentlich geringere Radialkraft F erforderlich ist, um das Medium zum Fließen zu bringen. Die Fig. 12 zeigt entsprechend der Fig. 9 die Belastungseigenschaften bei großen Kräften F. Die Fig. 13 zeigt entsprechend der Fig. 10 die Belastungseigenschaften bei kleinen Radialkräften F. Schließlich zeigt die Fig. 14 entsprechend der Fig. 11 die Belastungseigenschaften bei Verwendung einer weichelastischeren Lagerschale.

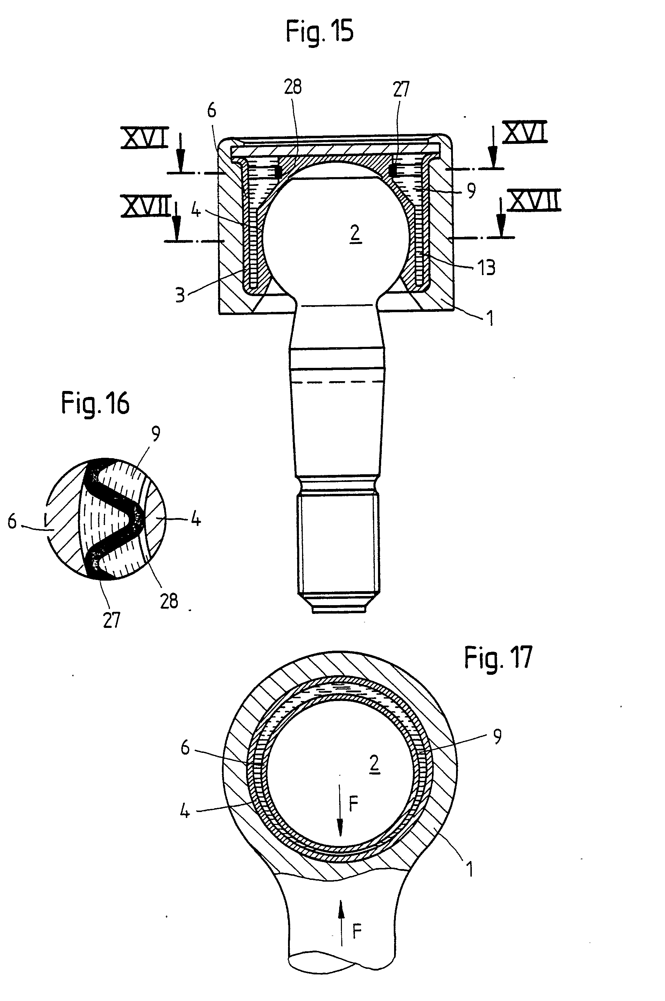

Bei dem in der Fig. 15 dargestellten Kugelgelenk ist in dem ringförmigen Hohlraum 9 zwischen Innenschale 4 und Außenschale 6 eine ringförmige Feder 27 angeordnet, die der Auslenkung des Kugelkopfes 2 aus der Ruhelage — wie beispielsweise in Fig. 17 für die Wirkung einer Kraft F dargestellt — eine Rückstellkraft entgegensetzt. Wie aus der Fig. 16 ersichtlich, ist die Feder 27 ein dünner, zwischen Außenschale 6 und Innenschale 4 meanderförmig gewölbter Streifen. Die Innenschale 4 hat Stützränder zur Lagefixierung der Feder 27, die im gezeigten Ausführungsbeispiel von den Flanken einer ringförmig umlaufenden Nut 28 gebildet werden. Die Anordnung der Feder 28 kann auch etwas näher zur Kugelmitte oder auch in Höhe des Kugeläquators erfolgen.

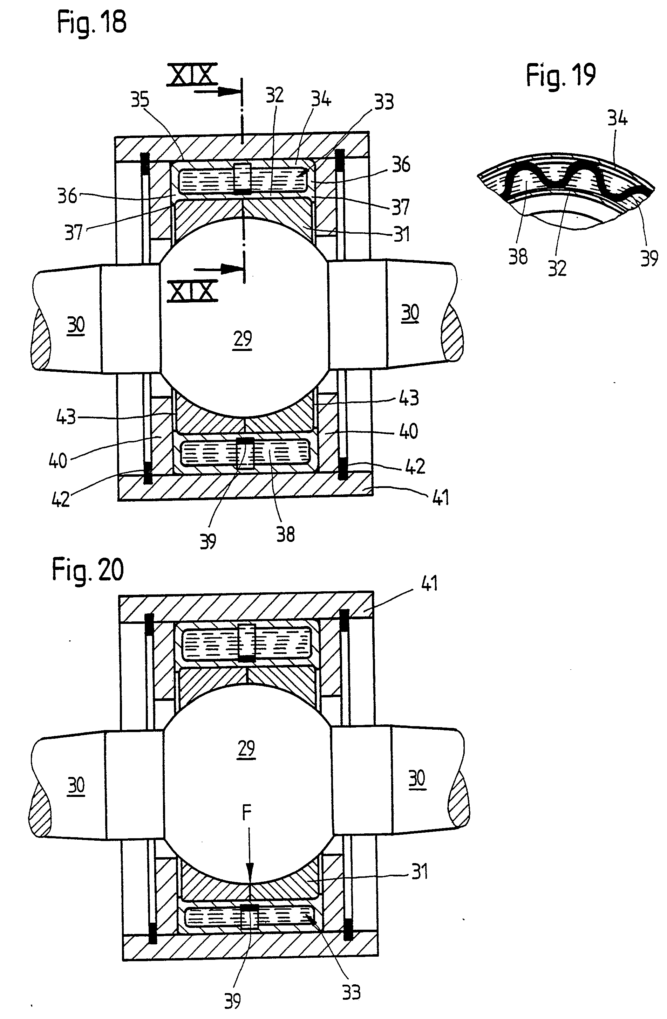

In den Fig. 18 bis 22 sind zwei weitere Kugelgelenke für höhere Belastungen dargestellt, die beispielsweise bei der Lagerung von Achsstreben einsetzbar sind. Es handelt sich um Kugelgelenke, deren Kugel 29 einen größeren Durchmesser hat und die einen Doppel-Kugelzapfen 30 haben. Bei dem in der Fig. 18 dargestellten Kugelgelenk ist die Kugel 29 in einer herkömmlichen Lagerschale beispielsweise aus Kunststoff oder einem Lagermetall gelagert. Die Lagerschale 31 wird von der Innenwand 32 eines Hohlkörpers 33 gehalten, der mit einer Außenwand 34 an der Gehäusebohrung 35 anliegt und die Innenwand 32 mit der Außenwand 34 verbindende Stirnwände 36 hat. Die Stirnwände 36 überkragen die Innenwand 32, wobei sie die Lagerschale 31 in axialer Richtung abstützende Ränder 37 bilden.

Der Hohlkörper 33 ist mit einem fließfähigen Medium 38 gefüllt und hat im Äquatorbereich der Kugel 29 eine ringförmige Feder 39, welche meanderförmig zwischen der Innenwand 32 und der Außenwand 34 des Hohlkörpers 33 gewölbt ist. Dies ist besonders deutlich aus der Schnittdarstellung der Fig. 19 ersichtlich.

Der Hohlkörper 33 wird in axialer Richtung von Stützringen 40 im Gelenkgehäuse 41 gehalten, welche ihrerseits von Sicherungsringen 42 abgestützt werden. Die Stützringe 40 überdecken teilweise die Stirnflächen 43 der Lagerschale 31, wobei sie Endanschläge für die axiale Bewegung der Lagerschale 31 bildet.

Wie die Fig. 20 zeigt, ist die Lagerschale 31 bei einer Auslenkung des Kugelkopfes 29 aus der Ruhelage durch Einwirkung einer Kraft F praktisch unverformt. Der Hohlkörper 33 hingegen ist unter Verdrängung des fließfähigen Mediums 38 elastisch verformt, wodurch sich die gewünschte Dämpfung der Bewegungsenergie ergibt. Durch bereichsweises Zusammendrücken der Feder 39 ergibt sich die gewünschte Rückstellkraft.

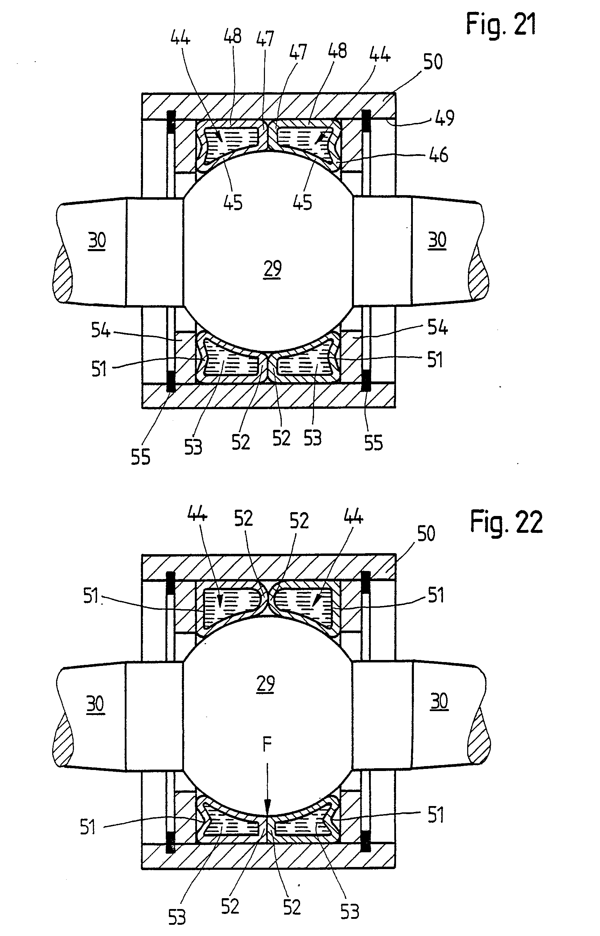

Bei der in Fig. 18 bis 20 beschriebenen Ausführungsform hat das Gelenkgehäuse 41 einen relativ großen Innendurchmesser, da eine Lagerschale 31 und ein zusätzlicher Hohlkörper 33 vorgesehen sind. Die Fig. 21 und 22 hingegen zeigen ein Kugelgelenk mit einem zweiteiligen Hohlkörper 44, dessen Innenwand 45 gleichzeitig die Lagerschale für die Kugel 29 bildet. Die Innenwand 45 ist über Stirnwände 46, 47 mit der Außenwand 48 verbunden, wobei die Außenwand an der Gehäusebohrung 49 des Gelenkgehäuses 50 abgestützt ist. Die Stirnwand 46 ist mit einer umlaufenden Falte 51 und die Stirnwand 47 mit einer Auswölbung 52 versehen. Die Hohlkörper sind mit einem fließfähigen Medium 53 gefüllt.

Die Stirnwände 46 der Hohlkörper werden von Stützringen 54 gestützt, welche ihrerseits von Sicherungsringen 55 im Gelenkgehäuse 50 gehalten werden. Die Stirnwände 47 sind aneinander abgestützt.

In der Fig. 22 ist dasselbe Kugelgelenk mit aus der Mittellage im Gelenkgehäuse 50 ausgelenkter Kugel 29 dargestellt, welche die symmetrisch um den Äquator der Kugel 29 angeordneten Hohlkörper 44 unter Verdrängung des fließfähigen Mediums 53 bereichsweise zusammendrückt und bereichsweise dehnt. Dabei sind insbesondere die Stirnwände 46, 47 der Hohlkörper 44 stark verformt, d. h. im Bereich der Falten 51 zusammengefaltet bzw. gestreckt und im Bereich der Auswölbungen 52 abgeflacht bzw. weiter ausgewölbt. Wenn — wie oben in der Fig. 22 gezeigt — die Falten 51 bereichsweise völlig gestreckt sind und — wie unten in der Fig. 22 gezeigt — die Auswölbungen 52 bereichsweise völlig abgeflacht sind und aneinander anliegen, ist annähernd die maximale Auslenkung der Kugel 29 erreicht, d. h. die für eine weitere Auslenkung aufzubringende Kraft steigt progressiv an. Die Verformung der Falten 51 und der Auswölbungen 52 erzeugt eine elastische Rückstellkraft, welche den Kugelkopf nach dem Wegfall der Kraft F in seine Ausgangslage zurückbewegt. Eine zusätzliche Feder ist nicht erforderlich, kann aber zur Unterstützung der Rückstellwirkung der Seitenwände vorgesehen werden.

**Patentansprüche**

1. Kugelgelenk für Übertragungsgestänge in Kraftfahrzeugen mit einem in ein Gelenkgehäuse (1, 41, 50) unter Zwischenlage einer Lagerschale (3, 31) eingesetzten Kugelkopf (2) bzw. einer eingesetzten Kugel (29), wobei zwischen der Lagerschale (3, 31) und dem Gelenkgehäuse (1, 41, 50) ein mit einem fließfähigen Medium (13, 38, 53) gefüllter, ringförmiger Hohlraum (9, 33, 44) mit elastisch verformbaren Wänden angeordnet ist, dadurch gekennzeichnet, daß sich der Hohlraum (9, 33, 44) nahezu über die gesamte axiale Länge des Gelenkgehäuses (1, 41, 50) erstreckt, so daß der Kugelkopf (2) bzw. die Kugel (29) unter Verdrängung des fließfähigen Mediums (13, 38, 53) Relativbewegungen quer zur Gehäuseachse ausführen kann.

2. Kugelgelenk nach Anspruch 1, dadurch gekennzeichnet, daß der Hohlraum von mindestens einem Hohlkörper (33, 44) aus einem elastischen Kunststoff gebildet wird, der die Lagerschale (31) mit einer Innenwand (32) abstützt, der mit einer Außenwand (34) an der Gehäusebohrung (35) anliegt und die Innenwand (32) mit der Außenwand (34) verbindende Stirnwände (36) hat.

3. Kugelgelenk nach Anspruch 2, dadurch gekennzeichnet, daß die Stirnwände (36) des Hohlkörpers (33) die Innenwand (32) überkragen und die Lagerschale (31) in axialer Richtung abstützen.

4. Kugelgelenk nach Anspruch 1, dadurch gekennzeichnet, daß der Hohlraum von mindestens einem Hohlkörper (44) aus einem elastischen Kunststoff gebildet wird, der den Kugelkopf bzw. die Kugel (29) mit einer als Lagerschale ausgebildeten Innenwand (45) abstützt, der mit einer Außenwand (48) an der Gehäusebohrung (49) anliegt und die Innenwand (45) und die Außenwand (48) verbindende Stirnwände (46, 47) hat.

5. Kugelgelenk nach einem der Ansprüche 2 bis 4, dadurch gekennzeichnet, daß die außenliegenden Stirnwände (46) des Hohlkörpers (44) ringförmig umlaufende Falten (51) haben und daß die gegebenenfalls innenliegenden Stirnwände (47) des Hohlkörpers (44) zur Äquatorebene des Kugelkopfes bzw. der Kugel (29) hin ausgewölbt sind und gegenseitig zu einer fast vollständigen, flächigen Anlage kommen, wenn eine Radiallast auftritt.

6. Kugelgelenk nach Anspruch 1, dadurch gekennzeichnet, daß bei einem Kugelgelenk mit eingesetztem Kugelkopf (2) die Lagerschale (3) aus einem elastischen Kunststoff eine topfförmige Innenschale (4) und eine die Innenschale umschließende, an der Gehäusebohrung (10) anliegende Außenschale (6) hat, wobei der Hohlraum (9) von der Innenschale (4) und der Außenschale (6), von einem die Innenschale (4) und die Außenschale (6) an einer Stirnseite verbindenden Verbindungssteg (11) und von einem die Außenschale (6) an der anderen Stirnseite schließenden Verschluß des Gelenkgehäuses (1) begrenzt wird.

7. Kugelgelenk nach Anspruch 6, dadurch gekennzeichnet, daß der Verbindungssteg (11) zwischen Innenschale (4) und Außenschale (6) auf einem Absatz (12) des Gelenkgehäuses (1) abgestützt ist.

8. Kugelgelenk nach einem der Ansprüche 6 bis 7, dadurch gekennzeichnet, daß die Lagerschale (3) im Bereich des Verbindungssteges (11) zwischen Innenschale (4) und Außenschale (6) verstärkt ist.

9. Kugelgelenk nach einem der Ansprüche 6 bis 8, dadurch gekennzeichnet, daß der Verschluß ein Gehäuseboden ist.

10. Kugelgelenk nach einem der Ansprüche 6 bis 8, dadurch gekennzeichnet, daß der Verschluß ein Gehäusedeckel (15) ist.

11. Kugelgelenk nach einem der Ansprüche 6 bis 10, dadurch gekennzeichnet, daß der Verschluß ein federnder Verschlußdeckel (21) ist.

12. Kugelgelenk nach einem der Ansprüche 1 bis 8, dadurch gekennzeichnet, daß der Verschluß eine Membran (23) ist, an die ein Druckraum (24) angrenzt, der eine Gasfüllung hat.

13. Kugelgelenk nach einem der Ansprüche 1 bis 12, dadurch gekennzeichnet, daß der Hohlraum (9, 33, 44) einen bereichsweise verengten Querschnitt hat.

14. Kugelgelenk nach einem der Ansprüche 1 bis 13, dadurch gekennzeichnet, daß in den Hohlraum (9, 33, 44) mindestens ein kompressibler Körper eingelagert ist.

15. Kugelgelenk nach Anspruch 14, dadurch gekennzeichnet, daß der kompressible Körper ein Ringkörper (18) ist, der die Gelenkachse umschließt.

16. Kugelgelenk nach einem der Ansprüche 14 bis 15, dadurch gekennzeichnet, daß die Wände des Hohlraumes (9, 33, 44) Stützränder für den kompressiblen Körper haben.

17. Kugelgelenk nach einem der Ansprüche 14 bis 16, dadurch gekennzeichnet, daß mindestens ein kompressibler Körper im Äquatorbereich des Kugelkopfes (2) bzw. der Kugel (29) angeordnet ist.

18. Kugelgelenk nach einem der Ansprüche 2 bis 17, dadurch gekennzeichnet, daß in dem Hohlraum (9, 33, 44) mindestens eine Feder (27, 39) angeordnet ist, die einer Auslenkung des Kugelkopfes (2) bzw. der Kugel (29) aus der Ruhelage eine Rückstellkraft entgegensetzt.

19. Kugelgelenk nach Anspruch 18, dadurch gekennzeichnet, daß die Feder (27, 39) ringförmig ausgebildet ist und die Gehäuseachse umschließt.

20. Kugelgelenk nach Anspruch 19, dadurch gekennzeichnet, daß die Feder (27, 39) ein dünner, meanderförmig gewölbter Streifen ist.

21. Kugelgelenk nach einem der Ansprüche 19 bis 20, dadurch gekennzeichnet, daß mindestens eine Feder (39) im Äquatorbereich des Kugelkopfes bzw. der Kugel (29) angeordnet ist.

22. Kugelgelenk nach einem der Ansprüche 18 bis 21, dadurch gekennzeichnet, daß die Wände des Hohlraumes (9, 33, 44) Stützränder zur Aufnahme der Feder (27, 39) haben.

23. Kugelgelenk nach einem der Ansprüche 18 bis 22, dadurch gekennzeichnet, daß die Feder aus einem elastischen Kunststoff an mindestens eine Wand des Hohlraumes angespritzt ist.

24. Kugelgelenk nach einem der Ansprüche 1 bis 23, dadurch gekennzeichnet, daß das fließfähige Medium (13, 38, 53) eine Flüssigkeit ist.

25. Kugelgelenk nach einem der Ansprüche 1 bis 24, dadurch gekennzeichnet, daß das fließfähige Medium (13, 38, 53) eine Paste ist.

26. Kugelgelenk nach einem der Ansprüche 1 bis 23, dadurch gekennzeichnet, daß das fließfähige Medium (13, 38, 53) ein Gas ist.

**Claims**

1. Ball-and-socket joint for a transmission linkage in motor vehicles, with a ball head (2) or a ball (29) inserted into a joint housing (1, 41, 50) under the interposition of a bearing shell (3, 31), an annular hollow space (9, 33, 44) which is filled with a free-flowing medium (13, 38, 53) and has elastically deformable walls being arranged between the bearing shell (3, 31) and the joint housing (1, 41, 50), characterized in that the hollow space (9, 33, 44) extends virtually over the entire axial length of the joint housing (1, 41, 50) so that the ball head (2) or the ball (29), while the free-flowing medium (13, 38, 53) is displaced, can execute relative movements transversely to the housing axis.

2. Ball-and-socket joint according to Claim 1, characterized in that the hollow space is formed by at least one hollow body (33, 44) which is made of an elastic plastic, supports the bearing shell (31) with an inner wall (32) , rests against the housing bore (35) with an outer wall (34) and has end walls (36) connecting the inner wall (32) to the outer wall (34).

3. Ball-and-socket joint according to Claim 2, characterized in that the end walls (36) of the hollow body (33) project beyond the inner wall (32) and support the bearing shell (31) in the axial direction.

4. Ball-and-socket joint according to Claim 1, characterized in that the hollow space is formed by at least one hollow body (44) which is made of an elastic plastic, supports the ball head or the ball (29) with an inner wall (45) designed as a bearing shell, rests against the housing bore (49) with an outer wall (48) and has end walls (46, 47) connecting the inner wall (45) and the outer wall (48).

5. Ball-and-socket joint according to one of Claims 2 to 4, characterized in that the outer lying end walls (46) of the hollow body (44) have folds (51) encircling in an annular shape, and that the if necessary inner lying end walls (47) of the hollow body (44) are arched out towards the equator plane of the ball head or the ball (29) and mutually come into almost complete, plane contact if a radial load occurs.

6. Ball-and-socket joint according to Claim 1, characterized in that, in a ball-and-socket joint with an inserted ball head (2), the bearing shell (3) made of an elastic plastic has a pot-shaped inner shell (4) and an outer shell (6) enclosing the inner shell and resting against the housing bore (10), with the hollow space (9) being defined by the inner shell (4) and the outer shell (6), by a connecting web (11) connecting the inner shell (4) and the outer shell (6) at one end face, and by a closure of the joint housing (1) closing the outer shell (6) at the other end face.

7. Ball-and-socket joint according to Claim 6, characterized in that the connecting web (11) between the inner shell (4) and the outer shell (6) is supported on a shoulder (12) of the joint housing (1).

8. Ball-and-socket joint according to one of Claims 6 to 7, characterized in that the bearing shell (3) is strengthened in the area of the connecting web (11) between the inner shell (4) and the outer shell (6).

9. Ball-and-socket joint according to one of Claims 6 to 8, characterized in that the closure is a housing base.

10. Ball-and-socket joint according to one of Claims 6 to 8, characterized in that the closure is a housing lid (15).

11. Ball-and-socket joint according to one of Claims 6 to 10, characterized in that the closure is a resilient closure lid (21).

12. Ball-and-socket joint according to one of Claims 1 to 8, characterized in that the closure is a diaphragm (23), adjoining which is a pressure space (24) which has a gas filling.

13. Ball-and-socket joint according to one of Claims 1 to 12, characterized in that the hollow space (9, 33, 44) has a locally narrowed cross-section.

14. Ball-and-socket joint according to one of Claims 1 to 13, characterized in that at least one compressible body is incorporated in the hollow space (9, 33, 44).

15. Ball-and-socket joint according to Claim 14, characterized in that the compressible body is an annular body (18) which encloses the joint axis.

16. Ball-and-socket joint according to one of Claims 14 to 15, characterized in that the walls of the hollow space (9, 33, 44) have supporting edges for the compressible body.

17. Ball-and-socket joint according to one of Claims 14 to 16, characterized in that at least one compressible body is arranged in the equator area of the ball head (2) or the ball (29).

18. Ball-and-socket joint according to one of Claims 2 to 17, characterized in that arranged in the hollow space (9, 33, 44) is at least one spring (27, 39) which sets up a restoring force against a deflection of the ball head (2) or the ball (29) from the position of rest.

19. Ball-and-socket joint according to Claim 18, characterized in that the spring (27, 39) is of an annular configuration and encloses the housing axis.

20. Ball-and-socket joint according to Claim 19, characterized in that the spring (27, 39) is a thin strip arched in a meander shape.

21. Ball-and-socket joint according to one of Claims 19 to 20, characterized in that at least one spring (39) is arranged in the equator area of the ball head or the ball (29).

22. Ball-and-socket joint according to one of Claims 18 to 21, characterized in that the walls of the hollow space (9, 33, 44) have supporting edges for locating the spring (27, 39).

23. Ball-and-socket joint according to one of Claims 18 to 22, characterized in that the spring made of an elastic plastic is injected onto at least one wall of the hollow space.

24. Ball-and-socket joint according to one of Claims 1 to 23, characterized in that the free-flowing medium (13, 38, 53) is a liquid.

25. Ball-and-socket joint according to one of Claims 1 to 24, characterized in that the free-flowing medium (13, 38, 53) is a paste.

26. Ball-and-socket joint according to one of Claims 1 to 23, characterized in that the free-flowing medium (13, 38, 53) is a gas.

**Revendications**

1. Rotule pour timoneries d'automobiles, comprenant un boîtier (1, 41, 50) de rotule dans lequel est logée, par l'intermédiaire d'une coquille (3, 1), une tête (2) de rotule ou une sphère (29), la coquille (3, 31) et le boîtier (1, 41, 50) de rotule délimitant entre eux une chambre creuse annulaire (9, 33, 44) à parois latérales élastiques, qui est remplie d'un fluide (13, 38, 53), caractérisée par le fait que la chambre creuse (9, 33, 44) s'étend sur la presque totalité de la longueur axiale du boîtier (1, 41, 50) de rotule, de telle sorte que la tête (2) de rotule, voire la sphère (29), puisse effectuer des mouvements relatifs transversalement à l'axe du boîtier, en déplaçant le fluide (13, 38, 53).

2. Rotule selon la revendication 1, caractérisée par le fait que la chambre creuse est constituée d'au moins un élément creux (33, 44) en matière plastique élastique, dont une paroi intérieure (32) maintient la coquille (31), dont une paroi extérieure (34) est plaquée contre l'alésage (35) du boîtier et dont la paroi intérieure (32) est reliée à la paroi extérieure (34) par l'intermédiaire de parois frontales (36).

3. Rotule selon la revendication 2, caractérisée par le fait que les parois frontales (36) de l'élément creux (33) débordent sur la paroi intérieure (32) et maintiennent la coquille (31) axialement.

4. Rotule selon la revendication 1, caractérisée par le fait que la chambre creuse est constituée d'au moins un élément creux (44) en matière plastique élastique, dont une paroi intérieure (45) en forme de coquille maintient la tête de rotule, voire la sphère (29), dont une paroi extérieure (48) est plaquée contre l'alésage (49) du boîtier et dont la paroi intérieure (45) est reliée à la paroi extérieure (48) par l'intermédiaire de parois frontales (46, 47).

5. Rotule selon une des revendications 2 à 4, caractérisée par le fait que les parois frontales externes (46) de l'élément creux (44) possèdent des plis (51) disposés circulairement autour du centre, et que, le cas échéant, les parois frontales internes (47) de l'élément creux (44) sont bombées dans le sens du plan équatorial de la tête de rotule, voire de la sphère (29), et sont amenées en contact superficiel presque total, sous l'effet d'une charge radiale.

6. Rotule selon la revendication 1, caractérisée par le fait que, dans le cas d'une rotule avec tête (2) de rotule emboîtée, la coquille (3) en matière plastique élastique comporte une coquille intérieure (4) en forme de cuvette, ainsi qu'une coquille extérieure (6) entourant la coquille intérieure et plaquée contre l'alésage (10) du boîtier, la chambre creuse (9) étant alors délimitée par la coquille intérieure (4) et la coquille extérieure (6), par une collerette (11) de liaison reliant la coquille intérieure (4) et la coquille extérieure (6) du côté de la face frontale, et par un bouchon du boîtier (1) de rotule, obturant la coquille extérieure (6) du côté de l'autre face frontale.

7. Rotule selon la revendication 6, caractérisée par le fait que la collerette (11) de liaison, comprise entre la coquille intérieure (4) et la coquille extérieure (6), s'appuie sur un palier (12) du boîtier (1) de rotule.

8. Rotule selon une des revendications 6 à 7, caractérisée par le fait que la coquille (3) est renforcée au niveau de la collerette (11) de liaison entre la coquille intérieure (4) et la coquille extérieure (6).

9. Rotule selon une des revendications 6 à 8, caractérisée par le fait que le bouchon est un fond du boîtier.

10. Rotule selon une des revendications 6 à 8, caractérisée par le fait que le bouchon est un capuchon (15) du boîtier.

11. Rotule selon une des revendications 6 à 10, caractérisée par le fait que le bouchon est un capuchon élastique (21).

12. Rotule selon une des revendications 1 à 8, caractérisée par le fait que le bouchon est une membrane (23) fermant une chambre (24) de pression remplie d'un gaz.

13. Rotule selon une des revendications 1 à 12, caractérisée par le fait que la chambre creuse (9, 33, 44) comporte des secteurs de section réduite.

14. Rotule selon une des revendications 1 à 13, caractérisée par le fait que la chambre creuse (9, 33, 44) contient au moins un corps compressible.

15. Rotule selon la revendication 14, caractérisée par le fait que le corps compressible est un anneau (18) entourant l'axe de la rotule.

16. Rotule selon une des revendications 14 à 15, caractérisée par le fait que les parois de la chambre creuse (9, 33, 44) sont pourvues de bords de maintien pour le corps compressible.

17. Rotule selon une des revendications 14 à 16, caractérisée par le fait qu'au moins un corps compressible est disposé au niveau de l'équateur de la tête (2) de rotule, voire de la sphère (29).

18. Rotule selon une des revendications 2 à 17, caractérisée par le fait qu'au moins un ressort (27, 39) est disposé à l'intérieur de la chambre creuse (9, 33, 44), qui oppose un effort de rappel au déplacement de la tête (2) de rotule, voire de la sphère (29), en dehors de leur position de repos.

19. Rotule selon la revendication 18, caractérisée par le fait que le ressort (27, 39) est réalisé en forme d'anneau et entoure l'axe du boîtier.

20. Rotule selon la revendication 19, caractérisée par le fait que le ressort (27, 39) est une lame mince cintrée en méandres.

21. Rotule selon une des revendications 19 à 20, caractérisée par le fait qu'au moins un ressort (39) est disposé au niveau de l'équateur de la tête de rotule, voire de la sphère (29).

22. Rotule selon une des revendications 18 à 21, caractérisée par le fait que les parois de la chambre creuse (9, 33, 44) sont pourvues de bords de maintien destinés à recevoir le ressort (27, 39).

23. Rotule selon une des revendications 18 à 22, caractérisée par le fait que le ressort, réalisé en une matière plastique élastique, est moulé par injection sur au moins une des parois de la chambre creuse.

24. Rotule selon une des revendications 1 à 23, caractérisée par le fait que le fluide (13, 38, 53) est un liquide.

25. Rotule selon une des revendications 1 à 24, caractérisée par le fait que le fluide (13, 38, 53) est une pâte.

26. Rotule selon une des revendications 1 à 23, caractérisée par le fait que le fluide (13, 38, 53) est un gaz.

Fig.1

Fig.2

Fig.3

Fig.4

0 206 131

**Fig. 5**

**Fig. 6**

3

Fig.7

Fig.8

Fig. 9

+F

−S      +S

−F

Fig.12

+F

−S      +S

−F

Fig.10

+F

−S      +S

−F

Fig.13

+F

−S      +S

−F

Fig.11

+F

−S      +S

−F

Fig.14

+F

−S      +S

−F

5

Fig. 15

Fig. 16

Fig. 17

Fig. 18

Fig. 19

Fig. 20

Fig. 21

Fig. 22